# EUROPÄISCHE PATENTSCHRIFT

(11) **EP 3 214 423 B1**
(45) Veröffentlichungstag und Bekanntmachung des Hinweises auf die Patenterteilung: **02.01.2019**
(21) Anmeldenummer: 16158729.0
(22) Anmeldetag: 04.03.2016
(51) Int. Cl.: G01M 17/10

(54) **LAGERVERSCHLEISS-FRÜHERKENNUNG**
EARLY DETECTION OF BEARING WEAR
DETECTION PRECOCE D'USURE DES PALIERS

(43) Veröffentlichungstag der Anmeldung: 06.09.2017
(73) Patentinhaber: Siemens Aktiengesellschaft, 80333 München (DE)
(72) Erfinder: KÖNIG, Frank, 44879 Bochum (DE)
(74) Vertreter: Maier, Daniel Oliver

(56) Entgegenhaltungen:
- EP-A1- 2 833 115
- DE-U1-202008 012 250
- US-B1- 7 213 789

## Beschreibung

Die Erfindung bezieht sich auf das technische Gebiet der Fluggepäckförderanlagen, die ausgestaltet sind, Güter in beispielsweise mittels Linearmotoren angetriebenen führerlosen schienengebundenen Wagen zu transportieren.

Fluggepäckförderanlagen erstrecken sich häufig über mehrere Kilometer Förderstrecken, wobei die Güter in Wagen auf Schienen transportiert werden. Der Transport in Wagen hat den Vorteil, dass hohe Geschwindigkeiten erreicht werden können. Systeme dieser Art werden häufig in großen Flughäfen mit mehreren Terminals verwendet, zur Überbrückung größerer Wege, beispielsweise von einem Terminal zum andern. Die Transportwagen werden von Linearmotoren angetrieben, laufen auf Schienen und umfassen in der Regel einen Behälter zur Aufnahme eines Gepäckstückes.

Um einen zuverlässigen Betrieb der Anlage gewährleisten zu können ist es entscheidend, dass die Transportwagen in einem technisch einwandfreien Zustand sind. Bricht ein verschlissenes Wälzlager bei einer Geschwindigkeit von 10 m/s verursacht das Schäden an Linearmotoren, Schiene sowie Sensoren der Förderstrecke.

Ein Ausfall der Förderanlage ist für einen Airport der Worst Case. Gepäck kann nicht mehr befördert werden, bleibt am Abflugort zurück und muss zu einem späteren Zeitpunkt sehr aufwendig dem Besitzer am Zielort zugestellt werden.

Die Wartung der Wagen ist somit wichtig um einen störungsfreien Betrieb gewährleisten zu können. Systeme dieser Art haben gewöhnlich mehrere tausend Wagen die theoretisch kontinuierlich im Umlauf sind. Die Wartung dieser Wagen basiert auf einen festgelegten Zyklus. Das heißt, dass jeder Wagen, unabhängig von den tatsächlichen Betriebsstunden zu einer manuellen Kontrolle aus dem Betrieb genommen wird. Ein typisches Überprüfungsintervall beträgt bei mehreren tausend Wagen einige Jahre. Somit kommen Wagen zur Überprüfung die nur eine geringe Anzahl Betriebsstunden aufweisen, aber auch Wagen die stark benutzt und die einen sehr hohen Verschleiß aufweisen.

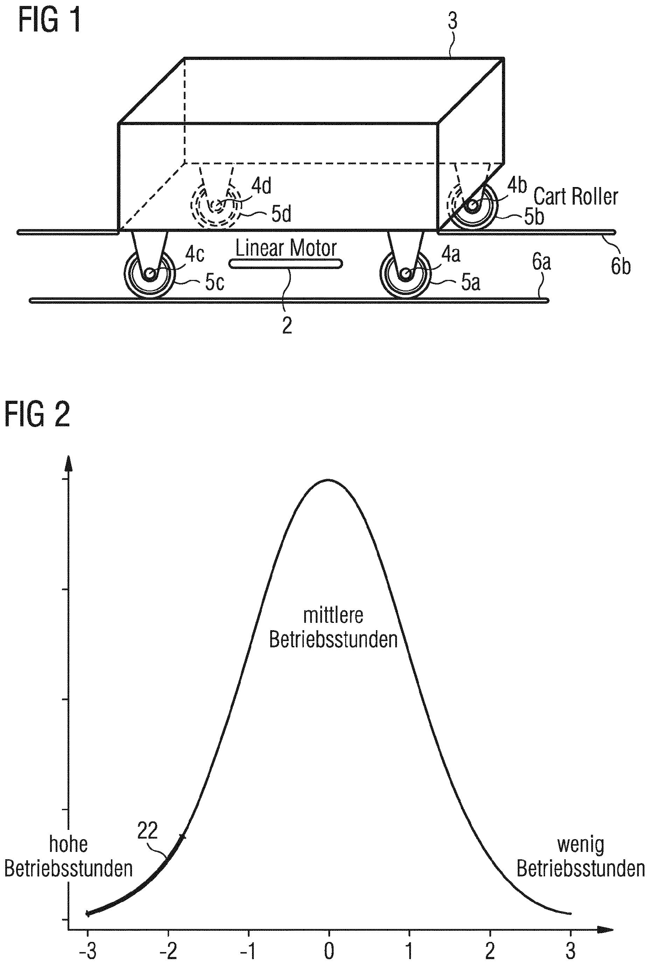

Es kommt vor, dass der Wartungstermin für Wagen mit hoher Betriebszeit zu spät kommt und diese im Betrieb dann ausfallen und die oben angegebenen Schäden verursachen. Hinzu kommt, dass die Wartung lediglich eine visuelle Kontrolle beinhaltet und ein verschlissenes Lager übersehen werden kann. Ein weiterer Faktor ist die Qualität der Lager selbst. Aus Kostengründen werden teilweise Lager eingesetzt die nicht über eine ausreichende Qualität verfügen um das definierte Ende des definierten Wartungszyklus erreichen zu können, speziell wenn das Lager in einem Wagen mit hoher Betriebszeit eingebaut wurde. Des Weiteren sind Umwelteinflüsse ein schlecht kalkulierbarer Faktor. Bedingt durch Baustellen (Umbauarbeiten), Luftfeuchtigkeit (nicht beheizter Lehrbehälterspeicher), Staub und durch konventionelle Gurtfördertechnik entstandener Abrieb kann es zu Verschmutzung der Rollenlager kommen, was die Lebensdauer reduzieren kann. Näherungsweise beschreibt eine Gaußsche Glockenkurve wie in Figur 2 dargestellt das Problem. In Figur 2 repräsentiert die x-Achse die Anzahl in zufälligen Einheiten eine Anzahl zu erwartender verbleibenden Betriebsstunden, und die y-Achse die Anzahl der Wagen. Die Wagen im Bereich 22 haben eine hohe Anzahl gefahrener Betriebsstunden und eine deutlich negative Anzahl verbleibender Betriebsstunden, was bedeutet, dass sie in die Wartung verbracht werden sollten. Für die Wagen mit einer durchschnittlichen Betriebsdauer ist eine Wartungsstrategie basierend auf einem festgelegten Zeitintervall ausreichend. Probleme bereiten Wagen mit überdurchschnittlicher hoher Betriebszeit, Lager mit Qualitätsproblemen oder Lager die den schädlichen Umwelteinflüssen (Luftfeuchtigkeit oder Verschmutzung) ausgesetzt waren und während des Betriebs ausfallen.

Es wäre daher wünschenswert, in Flughafenförderanlagen den Verschleiss von Wälzlagern, beispielsweise Rollenlagern, mittels eines Systems das den aktuellen Zustand des Rollenlagers erfasst frühzeitig zu erkennen, damit der betreffende Wagen gewartet oder ausgemustert werden kann.

Aus dem Gebiet der sehr viel schwereren und im Vergleich zu einem Wagen einer Fluggepäckförderanlage sehr viel teureren Eisenbahnen sind Systeme zur Temperaturüberwachung von Radlagern bekannt. Aus DE 20 2008 012 250 ist zudem bekannt, durch den gleichzeitigen Einsatz von IR-Sensoren und mindestens einem akustischen Sensor eine erhöhte Temperatur und die damit einhergehenden, spezifischen akustischen Emissionen eines Radlagers festzustellen. Diese Lösung zielt jedoch auf schwere Eisenbahnwagen ab, die massive metallische Radlager verwenden und mittels akustischer Messung eine Temperaturerhöhung feststellen sollen. Dieses Konzept wäre in Fluggepäckförderanlagen nachteilig, da deren Radlager weniger robust sind und oftmals Kunststoff- oder Gummiteile umfassen. Die Radlager einer Fluggepäckförderanlage weisen oftmals schon eine betriebsgefährdende Schädigung auf, die einen mechanischen Ursprung hat und im Extremfall zu einem Eiern des gesamten Rades führt, noch bevor eine signifikante Temperaturerhöhung des Radlagers messbar wäre. Es ist deshalb wünschenswert, einen Verschleiss eines Radlagers eines Wagens einer Fluggepäckförderanlage festzustellen, noch bevor eine Temperaturerhöhung stattfindet.

Weiterer Stand der Technik ist aus US 7,213,789 B1 bekannt.

Der vorliegenden Erfindung liegt somit die Aufgabe zugrunde eine höhere Zuverlässigkeit einer Flughafenanlage zu erreichen.

Diese Aufgabe wird durch die in den unabhängigen Ansprüchen beschriebenen Konzepten gelöst.

Zur Lösung dieser Aufgabe wird gemäss der Erfindung ein Verfahren vorgeschlagen, bei welchem ein Vibrationssignal eines vorbeifahrenden Wagens mittels eines stationären Vibrationssensorsystems gemessen wird. Das Wälzlager des vorbeifahrenden Wagens umfasst eine Radlauffläche, die mittels Kunststoff und/oder Gummi gedämpft auf einer Schiene (6a, 6b) rollt. Anhand des gemessenen Vibrationssignals wird festgestellt, ob ein Wälzlager des vorbeifahrenden Wagens Verschleiß aufweist.

Zudem wird gemäss der Erfindung ein Prüfsystem vorgeschlagen, welches ein stationäres Vibrationssensorsystem und ein mit dem Vibrationssensorsystem verbundenes Auswertesystem umfasst. Das Vibrationssensorsystem ist ausgestaltet, ein Vibrationssignal eines vorbeifahrenden Wagens zu erfassen. Das Auswertesystem ist ausgestaltet, anhand des gemessenen Vibrationssignals zu ermitteln, ob ein Wälzlager eines Rades des Wagens Verschleiß aufweist. Das Auswertesystem umfasst ein gespeichertes Vibrationssignal eines oder mehrerer einwandfreier Wälzlager und ist ausgestaltet zu ermitteln, ob ein Wälzlager eines Rades des Wagens Verschleiß aufweist, indem das gemessene Vibrationssignal mit dem gespeicherten Vibrationssignal verglichen wird. Das gespeicherte Vibrationssignal umfasst ein Vibrationssignal eines Rades, das von einer mittels Kunststoff oder Gummi gedämpften auf einer Schiene laufenden Radlauffläche stammt.

Vorteilhafte Ausführungsformen sind durch die abhängigen Ansprüche beschrieben.

Gemäss einer Ausführungsform umfasst das Vibrationssignal ein Vibrationsspektrum. Dies ist vorteilhaft, da Vibrationsspektren einfach messbar sind und gut geeignet sind, um einen Verschleiss von Wälzlagern zu erkennen. Vorzugsweise ist das Vibrationssignal ein Vibrationsspektrum.

Gemäss einer weiteren Ausführungsform umfasst das Messen des Vibrationssignals, dass für jedes Rad des vorbeifahrenden Wagens ein separates Radvibrationssignal gemessen wird. Dadurch können die Vibrationssignale der verschiedenen Wälzlager des vorbeifahrenden Wagens besser voneinander unterschieden werden. Zum einen lassen sich so zusätzliche Informationen gewinnen, um eine bessere Vorhersage über den Verschleiss zu treffen. Zum andern lässt sich so zuverlässiger feststellen, welches oder welche der Wälzlager des Wagens Verschleiss aufweisen. Vorzugsweise werden dabei für jedes Rad des vorbeifahrenden Wagens die Radvibrationssignale gleichzeitig gemessen. Dazu kann vorgesehen sein, dass das Vibrationssensorsystem für jedes Rad ein Teilsensorsystem umfasst, welches so angeordnet und ausgestaltet ist, das Vibrationssignal des jeweiligen Rades zu erfassen. Auf diese Weise können die Radvibrationssignale noch besser den einzelnen Rädern zugeordnet werden, respektive Radvibrationssignal-Anteile von andern Rädern bei der Messung eines Radvibrationssignals erkannt und beispielsweise rechnerisch eliminiert werden. Ein weiterer Vorteil ist, dass selbst bei hohen Geschwindigkeiten des Wagens die einzelnen Radvibrationssignale ermittelt werden können. Messungen bei hohen Geschwindigkeiten sind vorteilhaft, da dann die Vibrationssignale stärker sind.

Gemäss einer weiteren Ausführungsform wird anhand des gemessenen Vibrationssignals der Verschleiss noch vor einer betriebsgefährdenden Temperaturerhöhung des Wälzlagers festgestellt, beispielsweise noch vor einer Temperaturerhöhung, welche für in dem Wälzlager möglicherweise verwendetete Kunststoff- oder Gummiteile schädlich ist. Dadurch lässt sich die Wahrscheinlichkeit erhöhen, einen defekten Wagen frühzeitig zu erkennen und aus dem Verkehr zu ziehen, noch bevor dieser auf der Förderstrecke ausfällt und so die Förderstrecke blockieren würde. Dazu kann beispielsweise vorgesehen sein, dass das Auswertesystem ausgestaltet ist, einen Verschleiss noch vor einer betriebsgefährdenden Temperaturerhöhung festzustellen.

Gemäss einer weiteren Ausführungsform umfasst das Feststellen anhand des gemessenen Vibrationssignals, ob ein Wälzlager des vorbeifahrenden Wagens Verschleiß aufweist den Verfahrensschritt, ein gespeichertes Vibrationssignal eines oder mehrerer einwandfreier Wälzlager mit dem gemessenen Vibrationssignal zu vergleichen. Dazu umfasst beispielsweise das Auswertesystem ein gespeichertes Vibrationssignal eines oder mehrerer einwandfreier Wälzlager. Zudem ist das Auswertesystem ausgestaltet zu ermitteln, ob ein Wälzlager eines Rades des Wagens Verschleiß aufweist, indem das gemessene Vibrationssignal mit dem gespeicherten Vibrationssignal verglichen wird. Stimmt das gemessene Vibrationssignal beispielsweise innerhalb einer vorgegebenen Toleranz mit dem gespeicherten Vibrationssignal überein, so kann der überprüfte Wagen weiter verwendet werden. Ist das gemessene Vibrationssignal ausserhalb der vorgegebenen Toleranz wird der Wagen in die Wartung geschickt, oder ganz aus dem Verkehr gezogen.

Gemäss der Erfindung umfasst das Wälzlager des vorbeifahrenden Wagens eine Radlauffläche, die mittels Kunststoff und/oder Gummi gedämpft auf einer Schiene rollt. Vorzugsweise umfassen alle Räder des Wagens eine Kunststoff oder Gummi gedämpfte Radlauffläche. Dadurch werden durch Kontaktfläche Rad-Schiene weniger Vibrationen erzeugt, wodurch auf einen Verschleiss des Wälzlagers zurückzuführenden Vibrationen besser messbar sind. Vorzugsweise umfasst dabei das gespeicherte Vibrationssignal ein Vibrationssignal eines Rades, das von einer mittels Kunststoff oder Gummi gedämpften auf einer Schiene laufenden Radlauffläche stammt. Gemäss einer weiteren Ausführungsform umfasst das Wälzlager Teile aus Kunststoff und/oder Gummi. In diesem Fall ist es besonders vorteilhaft, einen Verschleiss noch vor einer störenden Temperaturerhöhung zu ermitteln, da das Wälzlager bei tieferen Temperaturen kaputt geht als bei einem rein metallischen Wälzlager, beispielsweise aus Stahlkomponenten.

Gemäss einer weiteren Ausführungsform ist das Vibrationssensorsystem mit dem Schienensystem auf welchem der Wagen fahren kann gekoppelt, um die Vibrationen von dem Wagen an das Vibrationssensorsystem zuleiten. Dadurch lässt sich daswird das Vibrationssignal messen, indem es über eine Schiene geleitet wird. Dadurch sind Vibrationen sehr gut messbar. Gemäss weiteren Ausführungsformen umfasst das Vibrationssignal ein Vibrationsspektrum. Gemäss weiteren Ausführungsformen umfasst das Radvibrationssignal ein Radvibrationsspektrum. Gemäss weiteren Ausführungsformen umfasst das gespeichertes Vibrationssignal ein gespeichertes Vibrationsspektrum. Bevorzugte Ausführungsbeispiele der Erfindung werden nachfolgend anhand der Figuren beispielsweise näher erläutert. Dabei zeigen:
Figur 1 eine perspektivische Ansicht eines Ausschnitts einer Fluggepäckförderanlage mit einem Wagen gemäss dem Stand der Technik;
Figur 2 eine Gausssche Glockenkurve, welche in zufälligen Einheiten eine Verteilung der Betriebsstunden von Wagen einer Fluggepäckförderanlage repräsentiert;
Figur 3 eine abstrahierte Darstellung einer Fluggepäckförderanlage mit einem Prüfsystem gemäss einer Ausführungform der Erfindung;
Figur 4 eine weitere abstrahierte Darstellung eines Teils der Fluggepäckförderanlage von Figur 3.

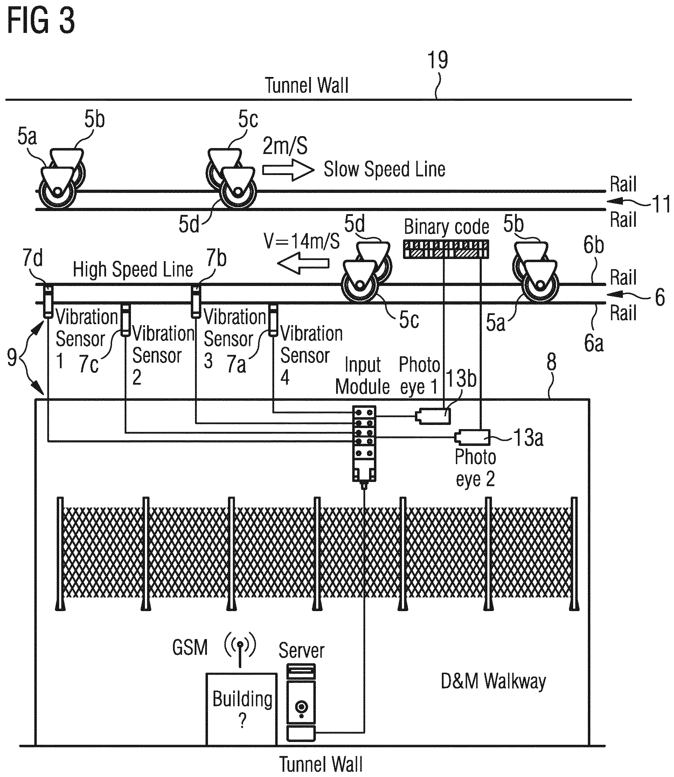

Figur 3 zeigt eine Darstellung einer Fluggepäckförderanlage 1 gemäss einer Ausführungform der Erfindung. Die Fluggepäckförderanlage 1 umfasst Förderstrecken 6, 11 auf welcher mittels Linearmotoren 2 Wagen 3 antreibbar sind. Die Förderstrecke 11 ist eine Slow-Speed Förderstrecke, welche bei mit einer Wagengeschwindigkeit von beispielsweise 2 m/s betrieben wird, während die Förderstrecke 6 als High Speed Förderstrecke mit beispielsweise 14 m/s betrieben wird.

Die Förderstrecken umfassen Schienen, auf denen schienengebundene Wagen 2 fahren. Von den Wagen sind in Figur 3 nur die Räder 5a-5d dargestellt. Grosse Teile solcher Förderstrecken verlaufen oftmals in Tunneln, was in Figur 3 durch die Tunnelwand 19 dargestellt ist.

Die Förderstrecke 6 umfasst die Schienen 6a, 6b und ist als Prüfstrecke ausgestaltet. Die Förderstrecke 6 umfasst dazu ein Prüfsystem 9. Das Prüfsystem 9 umfasst Vibrationssensoren 7a-7d und ein Auswertesystem 8, sowie optische Lesegeräte 13a, 13b.

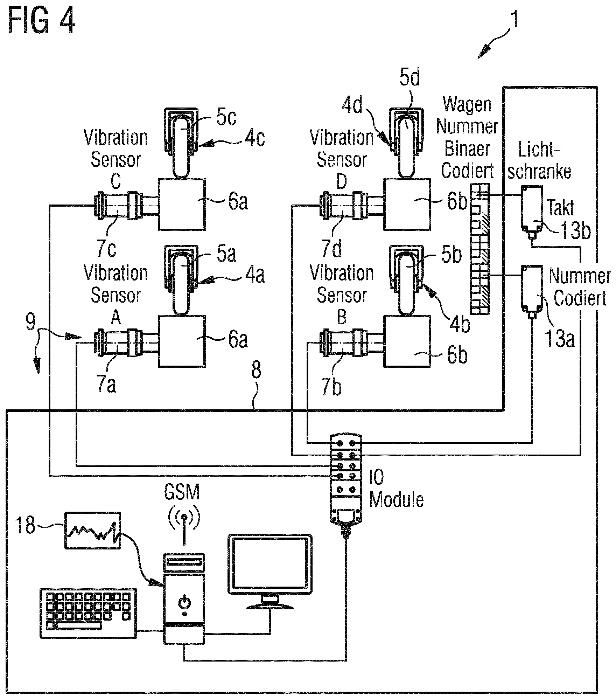

Figur 4 zeigt eine Darstellung der Förderstrecke 6 in welcher die Schienen 6a und 6b abstrahiert dargestellt sind, indem die Schiene 6a nicht durchgehend gezeichnet, sondern nur zwei logische Abschnitte davon gezeichnet sind. Dasselbe gilt für die Schiene 6b.

Mit Verweis auf die Figuren 3 und 4: Das Prüfsystem 9 dient dem Erhöhen der Zuverlässigkeit der Fluggepäckförderanlage 1 und umfasst das stationäre Vibrationssensorsystem 7a-7d und das mit dem Vibrationssensorsystem 7a-7d verbundene Auswertesystem 8. Jeder der Vibrationssensoren 7a-7d ist ausgestaltet, ein Vibrationssignal, beispielsweise ein Vibrationsspektrum oder ein zeitlicher Verlauf einer Vibrationsamplitude eines vorbeifahrenden Wagens 2 zu erfassen und an das Auswertesystem zu übermitteln. Das Auswertesystem 8 ist ausgestaltet, anhand des gemessenen Vibrationssignals festzustellen, ob ein Wälzlager 4a-4d eines Rades 5a-5d des Wagens 3 Verschleiß aufweist.

Die Vibrationssensoren 7a-7d sind so an die Schienen 6a, 6b gekoppelt, dass deren Abstände mit den Abständen der Räder 5a-5d, respektive den Wälzlagern 4a-4d korrespondieren. Auf diese Weise kann jedem der Vibrationssensoren genau ein Rad eines Wagens zugeordnet werden, sodass jeder der Vibrationssensoren 7a-7d ein Radvibrationssignal genau eines der Räder 5a-5d gleichzeitig erfassen kann. Für jedes Rad 5a-5d des vorbeifahrenden Wagens 2 kann so auf einfache Weise ein separates Radvibrationssignal gemessen werden.

Das Auswertesystem 8 ist ausgestaltet, einen Verschleiss noch vor einer betriebsgefährdenden Temperaturerhöhung der Wälzlagers 4a-4d festzustellen, beispielsweise vor einer Temperaturerhöhung, welche für in dem Wälzlager 4a-4d verwendetet Kunststoff- oder Gummiteile schädlich ist.

Das Auswertesystem 8 umfasst ein gespeichertes Vibrationssignal 18 eines oder mehrerer einwandfreier Wälzlager, und ist ausgestaltet zu ermitteln, ob ein Wälzlager 4a-4d eines Rades 5a-5d des Wagens 3 Verschleiß aufweist, indem das gemessene Vibrationssignal mit dem gespeicherten Vibrationssignal verglichen wird.

Vorteilhaft gegenüber dem Stand der Technik, beispielsweise gegenüber DE 20 2008 012 250 bei welcher akustische Emissionen gemessen werden ist, dass gemäss Ausführungsformen der Erfindung mittels einer Vibrationsmessung der Zustand eines Wälzlagers, insbesondere dessen Verscheiss, frühzeitig und noch vor einer mittels akustischem Signal messbaren Temperaturerhöhung erkannt wird, so dass Wartung explizit an einen erkannten Wagen durchgeführt werden kann bevor er im Betrieb ausfällt.

Eine Ausführungsform sieht vor, den Zustand der Rollenlager in der Anlage an strategisch günstigen Punkten der Anlage zu erfassen und auszuwerten. Dazu soll der Effekt ausgenützt werden, dass ein Lager das erste Zeichen von Verschleiß aufweist ein verändertes Vibrationsverhalten aufweist. Das entstehende Geräusch eines technisch einwandfreien Lagers ist unterschiedlich zu einem Lager das erste Anzeichen von Verschleiß aufweist.

Eine Ausführungsform basiert auf 4 Vibrationssensoren 7a-7d bei vierrädrigen Wagen 2, sodass ein Sensor pro Radlager verwendet wird, die die entstehende Vibration eines vorbeifahrenden Wagens erfasst und an ein Auswertesystem überträgt. Das Auswertesystem 8 vergleicht die aktuellen Signale mit dem Signal eines technisch einwandfreien Rollenlagers. Jeder Wagen verfügt über eine im System einmalige Nummer die in Klarschrift sowie in Form eines Streifens (binär codiert) an der Außenseite des Wagens angebracht ist. Das Auswertesystem erfasst mittels mindestens eines optischen Lesegeräts 13a, 13b die binär codierte Wagennummer und ordnet sie dem Vibrationsmeßergebnis zu.

In komplexen Anlagen mit mehreren Kilometer Förderstrecke wird diese Messeinrichtung an mehreren strategisch günstigen Stellen an die Schienen angebaut. Unter strategisch günstige Stellen sind Stellen gemeint an denen viele Wagen vorbeifahren, was die Wahrscheinlichkeit erhöht frühzeitig und bevor es zu einen Defekt kommt, einen beschädigten Wagen zu erkennen und somit die Möglichkeit zu haben ihn gezielt aus den System zu nehmen bevor ein größerer Schaden verursacht wird.

## Patentansprüche

1. Verfahren zum Erhöhen der Zuverlässigkeit einer Fluggepäckförderanlage (1), die ausgestaltet ist, Güter in vorzugsweise mittels Linearmotoren (2) angetriebenen führerlosen schienengebundenen Wagen (3) zu transportieren, das Verfahren umfassend die Verfahrensschritte:
- Messen eines Vibrationssignals, vorzugsweise eines Vibrationsspektrums, eines vorbeifahrenden Wagens (3) mittels eines stationären Vibrationssensorsystems (7a-7d);
- Feststellen anhand des gemessenen Vibrationssignals, ob ein Wälzlager (4a-4d) des vorbeifahrenden Wagens Verschleiß aufweist;
wobei das Wälzlager des vorbeifahrenden Wagens eine Radlauffläche umfasst, die mittels Kunststoff und/oder Gummi gedämpft auf einer Schiene (6a, 6b) rollt.

2. Verfahren nach Anspruch 1, wobei das Messen eines Vibrationssignals umfasst, dass für jedes Rad (5a-5d) des vorbeifahrenden Wagens ein separates Radvibrationssignal gemessen wird.

3. Verfahren nach einem der vorhergehenden Ansprüche, wobei anhand des gemessenen Vibrationssignals der Verschleiss noch vor einer betriebsgefährdenden Temperaturerhöhung des Wälzlagers (4a-4d) festgestellt wird, beispielsweise vor einer Temperaturerhöhung, welche für in dem Wälzlager (4a-4d) verwendetet Kunststoff- oder Gummiteile schädlich ist.

4. Verfahren nach einem der vorhergehenden Ansprüche, wobei das Feststellen anhand des gemessenen Vibrationssignals, ob ein Wälzlager des vorbeifahrenden Wagens Verschleiß aufweist, umfasst, ein gespeichertes Vibrationssignal eines oder mehrerer einwandfreier Wälzlager mit dem gemessenen Vibrationssignal zu vergleichen.

5. Verfahren nach einem der vorhergehenden Ansprüche, wobei das Wälzlager Teile aus Kunststoff und/oder Gummi umfasst.

6. Verfahren nach einem der vorhergehenden Ansprüche, wobei das Vibrationssignal gemessen wird, indem es über eine Schiene geleitet wird.

7. Prüfsystem (9) zum Erhöhen der Zuverlässigkeit einer schienengebundene mittels Linearmotoren (2) antreibbare führerlose Wagen (3) umfassenden Fluggepäckförderanlage (1); umfassend ein stationäres Vibrationssensorsystem (7a-7d) und ein mit dem Vibrationssensorsystem (7a-7d) verbundenes Auswertesystem (8); wobei
das Vibrationssensorsystem (7a-7d) ausgestaltet ist, ein Vibrationssignal eines vorbeifahrenden Wagens (3) zu erfassen; das Auswertesystem (8) ausgestaltet ist, anhand des gemessenen Vibrationssignals zu ermitteln, ob ein Wälzlager (4a-4d) eines Rades (5a-5d) des Wagens (3) Verschleiß aufweist; wobei das Auswertesystem (8) ein gespeichertes Vibrationssignal eines oder mehrerer einwandfreier Wälzlager umfasst, und ausgestaltet ist zu ermitteln, ob ein Wälzlager (4a-4d) eines Rades (5a-5d) des Wagens (3) Verschleiß aufweist, indem das gemessene Vibrationssignal mit dem gespeicherten Vibrationssignal verglichen wird; und wobei
das gespeicherte Vibrationssignal ein Vibrationssignal eines Rades (5a-5d) umfasst, das von einer mittels Kunststoff oder Gummi gedämpften auf einer Schiene laufenden Radlauffläche stammt.

8. Prüfsystem (9) nach Anspruch 7, wobei das Vibrationssensorsystem (7a-7d) für jedes Rad ein Teilsensorsystem (7a-7d) umfasst, welches so angeordnet und ausgestaltet ist, das Vibrationssignal des jeweiligen Rades (5a-5d) zu erfassen.

9. Prüfsystem (9) nach einem der Ansprüche 7 oder 8, wobei das Auswertesystem (8) ausgestaltet ist, einen Verschleiss noch vor einer betriebsgefährdenden Temperaturerhöhung festzustellen.

10. Prüfsystem (9) nach einem der Ansprüche 7 bis 9, wobei das Wälzlager (4a-4d) Teile aus Kunststoff und/oder Gummi umfasst.

11. Prüfsystem (9) nach einem der Ansprüche 7 bis 10, wobei das Vibrationssensorsystem (7a-7d) mit einem Schienensystem (6a, 6b) gekoppelt ist um die Vibrationen von dem Wagen (3) an das Vibrationssensorsystem (7a-7d) zu leiten.

12. Prüfsystem (9) nach einem der Ansprüche 7 bis 11, wobei das Vibrationssignal ein Vibrationsspektrum umfasst und/oder das Radvibrationssignal ein Radvibrationsspektrum umfasst und/oder das gespeichertes Vibrationssignal ein gespeichertes Vibrationsspektrum umfasst.

## Claims

1. Method for increasing the reliability of a luggage conveyor system (1), which is designed to transport goods in driverless rail-bound carts (3) driven preferably by means of linear motors (2), the method comprising the method steps:
- measuring a vibration signal, preferably a vibration spectrum, of a passing cart (3) by means of a stationary vibration sensor system (7a-7d);
- ascertaining, using the measured vibration signal, whether a roller bearing (4a-4d) of the passing cart has wear;
wherein the roller bearing of the passing cart comprises a wheel tread which rolls on a rail (6a, 6b) damped by means of plastic and/or rubber.

2. Method according to claim 1, wherein the measurement of a vibration signal involves a separate wheel vibration signal being measured for each wheel (5a-5d) of the passing cart.

3. Method according to one of the preceding claims, wherein the measured vibration signal is used to ascertain the wear even before a temperature rise of the roller bearing (4a-4d) that could endanger operations, for instance before a temperature rise which is detrimental to plastic or rubber parts used in the roller bearing (4a-4d).

4. Method according to one of the preceding claims, wherein using the measured vibration signal to ascertain whether a roller bearing of the passing cart has wear involves comparing a stored vibration signal of one or more fault-free roller bearings with the measured vibration signal.

5. Method according to one of the preceding claims, wherein the roller bearing comprises parts made from plastic and/or rubber.

6. Method according to one of the preceding claims, wherein the vibration signal is measured by being conducted via a rail.

7. Testing system (9) for increasing the reliability of a luggage conveyor system (1) comprising rail-bound driverless carts (3) which can be driven by means of linear motors (2), comprising a stationary vibration sensor system (7a-7d) and an evaluation system (8) connected to the vibration sensor system (7a-7d), wherein
the vibration sensor system (7a-7d) is designed to detect a vibration signal of a passing cart (3); the evaluation system (8) is designed to determine, using the measured vibration signal, whether a roller bearing (4a-4d) of a wheel (5a-5d) of the cart (3) has wear; wherein the evaluation system (8) comprises a stored vibration signal of one or more fault-free roller bearings, and is designed to determine whether a roller bearing (4a-4d) of a wheel (5a-5d) of the cart (3) has wear, by the measured vibration signal being compared with the stored vibration signal; and wherein
the stored vibration signal comprises a vibration signal of a wheel (5a-5d), which originates from a wheel tread running on a rail damped by means of plastic or rubber.

8. Testing system (9) according to claim 7, wherein the vibration sensor system (7a-7d) for each wheel comprises a sensor sub-system (7a-7d), which is arranged and designed to detect the vibration signal of the respective wheel (5a-5d).

9. Testing system (9) according to one of claims 7 or 8, wherein the evaluation system (8) is designed to ascertain a wear even before a temperature rise that could endanger operations.

10. Testing system (9) according to one of claims 7 to 9, wherein the roller bearing (4a-4d) comprises parts made from plastic and/or rubber.

11. Testing system (9) according to one of claims 7 to 10, wherein the vibration sensor system (7a-7d) is coupled to a rail system (6a, 6b) in order to conduct the vibrations from the cart (3) to the vibration sensor system (7a-7d).

12. Testing system (9) according to one of claims 7 to 11, wherein the vibration signal comprises a vibration spectrum and/or the wheel vibration signal comprises a wheel vibration spectrum and/or the stored vibration signal comprises a stored vibration spectrum.

## Revendications

1. Procédé pour améliorer la fiabilité d'une installation de convoyage de bagages (1) d'un aéroport, qui est conçue pour transporter des marchandises dans des chariots (3) sans conducteur roulant sur rails, entraînés de préférence au moyen de moteurs linéaires (2), le procédé comprenant ces étapes de procédé :
- mesurer un signal de vibration, de préférence un spectre de vibrations, d'un chariot (3) qui passe au moyen d'un système de capteurs de vibrations fixes (7a-7d) ;
- déterminer, à l'aide du signal de vibration mesuré, si un palier à roulement (4a-4d) du chariot qui passe présente une usure ;
dans lequel le palier à roulement du chariot qui passe comprend une surface de roulement, amortie par une matière plastique et/ou du caoutchouc, qui roule sur un rail (6a, 6b).

2. Procédé selon la revendication 1, dans lequel la mesure d'un signal de vibration comprend la mesure d'un signal de vibration de roue séparé pour chaque roue (5a-5d) du chariot qui passe.

3. Procédé selon l'une des revendications précédentes, dans lequel l'usure est déterminée, à l'aide du signal de vibration mesuré, avant même une augmentation de la température du palier à roulement (4a-4d) dangereuse pour son fonctionnement, par exemple avant une augmentation de la température qui soit néfaste pour les parties en matière plastique ou en caoutchouc utilisées dans le palier à roulement (4a-4d).

4. Procédé selon l'une des revendications précédentes, dans lequel le fait de déterminer, à l'aide du signal de vibration mesuré, si un palier à roulement du chariot qui passe présente une usure comprend la comparaison d'un signal de vibration enregistré d'un ou de plusieurs paliers à roulement en bon état avec le signal de vibration mesuré.

5. Procédé selon l'une des revendications précédentes, dans lequel le palier à roulement comprend des parties en matière plastique et/ou en caoutchouc.

6. Procédé selon l'une des revendications précédentes, dans lequel le signal de vibration est mesuré en étant conduit par un rail.

7. Système de contrôle (9) pour augmenter la fiabilité d'une installation de convoyage de bagages (1) d'un aéroport comprenant des chariots (3) sans conducteur roulant sur rails pouvant être entraînés au moyen de moteurs linéaires (2) ; comprenant un système de capteurs de vibrations fixes (7a-7d) et un système d'analyse (8) relié au système de capteurs de vibrations (7a-7d) ; dans lequel
le système de capteurs de vibrations (7a-7d) est conçu pour détecter un signal de vibration d'un chariot (3) qui passe ;
le système d'analyse (8) est conçu pour déterminer, à l'aide du signal de vibration mesuré, si un palier à roulement (4a-4d) d'une roue (5a-5d) du chariot (3) présente une usure ; dans lequel
le système d'analyse (8) comprend un signal de vibration enregistré d'un ou de plusieurs paliers de roulement en bon état, et est conçu pour déterminer si un palier à roulement (4a-4d) d'une roue (5a-5d) du chariot (3) présente une usure en comparant le signal de vibration mesuré au signal de vibration enregistré ; et dans lequel
le signal de vibration enregistré comprend un signal de vibration d'une roue (5a-5d) qui provient d'une surface de roulement amortie par une matière plastique ou du caoutchouc qui roule sur un rail.

8. Système de contrôle (9) selon la revendication 7, dans lequel le système de capteurs de vibrations (7a-7d) comprend, pour chaque roue, un système de capteurs partiel (7a-7d) qui est disposé et conçu de façon à détecter le signal de vibration de la roue (5a-5d) respective.

9. Système de contrôle (9) selon l'une des revendications 7 ou 8, dans lequel le système d'analyse (8) est conçu pour déterminer une usure avant même une augmentation de température dangereuse pour le fonctionnement.

10. Système de contrôle (9) selon l'une des revendications 7 à 9, dans lequel le palier à roulement (4a-4d) comprend des parties en matière plastique et/ou en caoutchouc.

11. Système de contrôle (9) selon l'une des revendications 7 à 10, dans lequel le système de capteurs de vibrations (7a-7d) est couplé à un système de rails (6a, 6b) pour conduire les vibrations du chariot (3) au système de capteurs de vibrations (7a-7d).

12. Système de contrôle (9) selon l'une des revendications 7 à 11, dans lequel le signal de vibration comprend un spectre de vibrations et/ou le signal de vibration de la roue comprend un spectre de vibrations de la roue et/ou le signal de vibration enregistré comprend un spectre de vibrations enregistré.
